# EUROPEAN PATENT APPLICATION

(11) **EP 1 985 619 A1**
(43) Date of publication of application: **29.10.2008**
(21) Application number: 07290550.8
(22) Date of filing: 27.04.2007
(51) Int. Cl.: C07F 17/00, C08F 4/00, C08F 10/00, C08F 112/08

(54) **Isospecific styrene polymerisation**

(71) Applicant: TOTAL PETROCHEMICALS RESEARCH FELUY, 7181 Seneffe (Feluy) (BE); Centre National de la Recherche Scientifique (CNRS), 75006 Paris (FR)
(72) Inventor: Rodrigues, Anne-Sophie, 35700 Rennes (FR); Carpentier, Jean-Francois, 35690 Acigne (FR); Razavi, Abbas, 7000 Mons (BE); Kirillov, Evgueni, App. B318, 35000 Rennes (FR)
(74) Representative: Neel, Henry

(57) **Abstract**

The present invention discloses the use of neutral ansa-bis(indenyl) allyl lanthanide complexes for the isospecific homo- or co-polymerisation of styrene.

## Description

This invention relates to new neutral ansa-bis(indenyl) allyl group 3 metal complexes that are very active, without any co-catalyst or activator, in the preparation of highly isotactic polystyrene.

Styrene polymerisation induced by catalyst systems based upon organometallic species of group 3 metals has not been widely investigated. Moderate to high activitiy in the polymerisation of styrene was reported by Hou et al. (Hou, Z.; Zhang, Y.; Tezuka, H.; Xie, P.; Tardif, O.; Koizumi, T.-A.; Yamazaki, H.; Wakatsuki, Y. in J. Am; Chem. Soc. 2000, 122, 10533). They used polymeric Sm(II) derivatives such as [Sm(R)(THF)ₓ(C₅Me₅)₂K(THF)]*ₙ* wherein R was selected from CH(SiMe₃)₂, SiH₃, OAr, SAr, PHAr or N(SiMe₃)₂). The resulting polystyrene was atactic and had high molecular weight.

Baudry-Barbier et al. (Baudry-Barbier, D.; Camus, E.; Dormond, A.; Visseaux, M. in Appl. Organomet. Chem. 1999, 13, 813) used allyl complexes Ln(C₃H₅)₃(Solv)*ₙ*, [Ln(C₃H₅)₄]Li(Solv)*ₙ*, [(Cp-CMe₂CMe₂-Cp)Ln(C₃H₅)]Li(Solv)ₙ and (Cp-CMe₂CMe₂-Cp)Ln(C₃H₅) wherein Ln was Nd or Sm to produce syndiotactic-enriched (*rrrr* < 70%) or isotactic-enriched *(mmmm* < 80%) polystyrene.

Controlled, highly syndiospecific polymerisation of styrene mediated by organolanthanides has been achieved so far only with the binary system (C₅Me₄SiMe₃)Sc(CH₂SiMe₃)₂/[Ph₃C][B(C₆F₅)₄] described by Luo et al. (Luo, Y.; Baldamus, J.; Hou, Z. in J. Am. Chem. Soc. 2004, 126, 13910) and with single-component allyl complexes incorporating bridged cyclopentadienyl-fluorenyl ligands described by Kirillov et al. (Kirillov, E.; Toupet, L.; Lehmann, C. W.; Razavi, A.; Kahlal, S.; Saillard, J.-Y.; Carpentier, J.-F. in Organometallics 2003, 22, 4038, and Kirillov, E.; Lehmann, C. W.; Razavi, A.; Carpentier, J.-F. in J. Am. Chem. Soc. 2004, 126, 12240).

There is no group 3 catalytic system reported to produce highly isospecific polystyrene. Isotactic polystyrene was discovered half a century ago but is still best produced by heterogeneous catalysis as described for example by Natta et al. (Natta, G.; Pino, P.; Corradini, P.; Danusso, F.; Mantica, E.; Mazzanti, G.; Moraglio, G. in J. Am. Chem. Soc. 1955, 77, 1708) or by Natta and Corradini (Natta, G.; Corradini, P. in Makromol. Chem. 1955, 16, 77) or by Overberger and Mark (Overberger, C.; Mark, H. in J. Polym. Sci. 1959, 35, 381) or by Kern et al. (Kern, R. J.; Hurst, H. G.; Richard, W. J. In J. Polym. Sci. 1960, 45, 195).

Alternatively, isotactic polystyrene was prepared by anionic polymerisation as described by Cazzaniga and Cohen (Cazzaniga, L.; Cohen, R. E. in Macromolecules 1989, 22, 4125) or by Makino and Hogen-Esch (Makino, T.; Hogen-Esch, T. E. in Macromolecules 1999, 32, 5712).

Another method used some homogeneous group 4 catalysts as described for example in Arai et al. (Arai, T.; Ohtsu, T.; Suzuki, S. In Polym. Prepr. 1998, 39, 220, and Arai, T.; Suzuki, S.; Ohtsu, T. in Olefin Polymerization, ACS Symposium Series, 749, American Chemical Society; Washington, DC, 2000; p 66) or in Capacchione et al. (Capacchione, C.; Proto, A.; Ebeling, H.; Mülhaupt, R.; Möller, K.; Spaniol, T. P.; Okuda, J. in J . Am. Chem. Soc. 2003, 125, 4964 and Capacchione, C.; Manivannan, R.; Barone, M.; Beckerle, K.; Centore, R.; Oliva, L.; Proto, A.; Tuzi, A.; Spaniol, T. P.; Okuda, J. in Organometallics, 2005, 24, 2971).

There is thus a need to develop new catalyst systems capable of producing highly isotactic polystyrene.

It is an aim of the present invention to prepare catalyst systems that are very active without the addition of activating agents.

It is also an aim of the present invention to prepare catalyst systems that can efficiently polymerise styrene.

It another aim of the present invention to prepare highly isotactic polystyrene, in a wide temperature range. Such temperature can be up to 120°C.

Accordingly, the present invention discloses neutral ansa-bis(indenyl) allyl group 3 metal complexes that are very active and selective for preparing isospecific homo- or co-polymers of styrene.

These allyl group 3 metal are very active alone and do not require the addition of any activating agents or co-catalysts.

In a preferred embodiment according to the present invention, the bridged bis(indenyl) allyl group 3 metal complex is represented by general formula

[(Ind) R" (Ind)] Ln (allyl) (ether)ₙ

wherein (Ind) is a substituted or unsubstituted indenyl or hydrogenated indenyl group, R" is a bridge between the 1,1'-indenyl groups imparting stereorigidity to the complex, Ln is a metal Group 3 of the Periodic Table including the lanthanide elements, allyl is an allylic group of the general formula C₃R₅ wherein each R is the same or different and is hydrogen or alkyl group or aryl group or silyl group with the provision that at least one R is a silyl group, ether is a donor solvent preferably selected from diethylether or THF and n is an integer from 0 to 2. Preferably the silyl group is a trialkyl- or triarylsilyl group, e.g. SiMe₃. Preferably the allyl group is 1,3-(SiR₃)₂C₃H₃. Preferably the donor solvent, if any, is THF.

The substituents on the indenyl groups are not particularly limited: they are the same or different and are independently chosen from hydrogen or a group of formula XR'ᵥ in which X is chosen from Group 14, oxygen or nitrogen and each R' is the same or different and chosen from hydrogen or hydrocarbyl having from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring preferably have R' as hydrogen or CH₃.

Preferably, the indenyl groups are unsubstituted or mono- or di-substituted with an alkyl or aryl group and they both have the same substitution pattern. When monosubstituted, the substituent on each indenyl group is at position 2 or 4 and preferably at position 2 and is selected from methyl, tert-butyl, phenyl, or naphtyl. When di-substituted the substituents on each indenyl group are preferably at positions 2 and 4 and are selected from methyl, tert-butyl, phenyl, or naphtyl. Most preferably both indenyl groups are unsubstituted.

Preferably, Ln is Y or Nd.

Preferably, the bridge R" is Me₂C, Me₂Si or Ph₂C, more preferably, it is Me₂C.

The preferred metallocene catalyst components according to the present invention are represented those of formula (Ind-CMe₂-Ind) Ln (allyl)(ether)ₙ wherein the indenyl groups are unsubstituted, CMe₂ is the bridge, Ln is Y or Nd, allyl is 1,3- (SiMe₃)₂C₃H₃ and ether is absent.

The present invention also discloses a method for preparing the bridged bis(indenyl) allyl lanthanide complexes by a one pot procedure represented for example by scheme 1

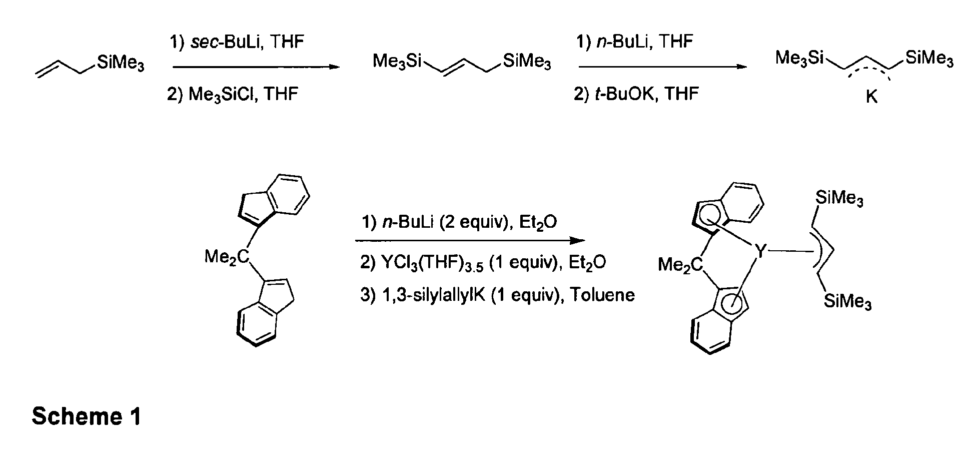

It is a one pot procedure analogous to that used for preparing the bridged cyclopentadienyl-fluorenyl ligands described for example in Kirillov et al. ( Kirillov, E.; Toupet, L.; Lehmann, C. W.; Razavi, A.; Kahlal, S.; Saillard, J.-Y.; Carpentier, J.-F., in Organometallics 2003, 22, 4038; or in Kirillov, E.; Lehmann, C. W.; Razavi, A.; Carpentier, J.-F., in J. Am. Chem. Soc. 2004, 126, 12240).

The salt metathesis reaction in an ether solvent, selected preferably from Et₂O or THF, between, for instance, the dilithiated salt of the ligand and a metal precursor of formula
Ln(Hal)₃ (THF)ₙ wherein Hal is a halogen, preferably selected from Cl, Br; I.
results in halide complexes of general formula

(Ind-R"-Ind) LnX (ether)ₙ.

The halide complex is then directly reacted with an allyl salt, e.g. a potassium, or sodium or lithium salt, to yield a neutral allyl lanthanide complex

(Ind-R"-Ind) Ln (allyl) (ether)ₙ

No intermediate purification is necessary.

These complexes are C₂ symmetric and are very active as such in the homo- or co-polymerisation of styrene. Suitable comonomers include ethylene and alpha-olefins, the preferred comonomer being ethylene. These complexes can also be used in the polymerisation of ethylene and alpha-olefins.

The present invention also discloses a method for preparing isospecific styrene that comprises the steps of:
a) injecting the above neutral allyl group 3 metal complex in the reactor;
b) injecting styrene monomer and optional comonomer into the reactor;
c) maintaining under polymerisation conditions;
d) retrieving isotactic polystyrene.

Homo- and co-polymerisation reactions are conducted under inert atmosphere, typically at a pressure of about 1 bar under nitrogen or argon, either in bulk conditions (neat styrene, no solvent) or in a hydrocarbon solvent such as for example cyclohexane. Preferably, polymerisations are conducted in bulk conditions. The styrene-to-catalyst ratio ranges from 400 to 2,500, preferably from 600 to 1,500. The polymerisation temperature ranges from room temperature to 120 °C, preferably from 60 to 100 °C. At the end of polymerisation, methanol is added to the reaction medium to quench the reaction. The polymer is collected by filtration, washed with methanol and dried under vacuum.

The polystyrene obtained according to the present invention is monomodal with a broad molecular weight distribution. The molecular weight distribution is determined by the polydispersity index D that is the ratio Mw/Mn of the weight average molecular weight Mw over the number average molecular weight Mn, both molecular weights being determined by Gel Permeation Chromatography (GPC). The polydispersity index D is of from 1.2 to 7, preferably of from 1.6 to 6, more preferably of from 1.8 to 6. thereby indicating a low initiation efficiency of the polymerisation reaction. The number average molecular weight Mn is typically of from 10,000 to 200,000 g/mol, preferably of from 10,000 to 150,000 g/mol, more preferably of from 10,000 to 80,000 g/mol,

In addition, NMR spectroscopy of the polymers reveals a highly isotactic microstructure. The isotactic index is larger than 95%, advantageously larger than 96%, preferably larger than 97%, more preferably larger than 98%, much more preferably larger than 99%. A remarkable feature of these catalyst systems is their ability to produce highly isotactic polystyrene even at very high temperature. The high isotacticity of polystyrene results in high melting temperature Tm. The melting temperature is determined by DSC calorimetry and is of at least 205 °C, preferably of at least 210 °C more preferably in the range 210°C-220°C.

The present invention also relates to a monomodal polystyrene with a broad molecular weight distribution as a new product. The polydispersity index D is of from 1.2 to 7, preferably of from 1.6 to 6, more preferably of from 1.8 to 6. The number average molecular weight Mn is typically of from 10,000 to 200,000 g/mol, preferably of from 10,000 to 150,000 g/mol, more preferably of from 10,000 to 80,000 g/mol. In addition, NMR spectroscopy of the polymers reveals a highly isotactic microstructure. The isotactic index is larger than 95%, advantageously larger than 96%, preferably larger than 97%, more preferably larger than 98%, much more preferably larger than 99%.

The present invention also relates to a monomodal polystyrene as a new product with a broad molecular weight distribution whichever is the tacticity. The polydispersity index D is of from 1.2 to 7, preferably of from 1.6 to 6, more preferably of from 1.8 to 6.

The tacticity of the polystyrenes was determined by ¹³C NMR spectroscopy. The spectrum of the highly isotactic polymer presents a single sharp resonance at δ = 146.5 ppm assigned to the phenyl *ipso* carbon. According to (a) Longo, P.;Grassi, A.; Oliva, L.; Ammendola, P. Makromol. Chem. 1990, 191, 237 and (b) Kawamura, T.; Toshima, N. Macromol. Rapid Commun. 1994, 15, 479 this sharp resonance is unambiguously attributed to the *mmmmmm* heptad whereas the *rrrrrr* heptad signal appears at δ = 145.5 ppm (Feil, F; Harder, S Macromolecules 2003, 36, 3446). Methylene resonances (δ= 42-46 ppm) can also be used on the hexad level to determine the isotacticity rate.
The high isotacticity of the polystyrene was also illustrated by the value of the *T*ₘ determined by DSC (Capacchione, C.; Proto, A.; Ebeling, H.; Mullhaupt, R.; Moller, K.; Spaniol, T.; Okuda, J. J. Am. Chem. Soc. 2003, 125, 4964-4965).

### List of figures.

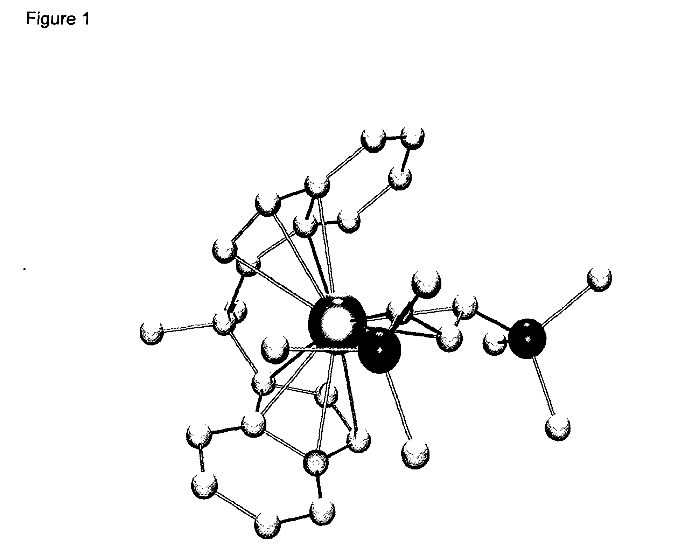

Figure 1 represents the X-ray structure of **[Ind-CMe₂-Ind]Y[1,3-(SiMe₃)₂C₃H₃]** also called complex **1**.

### Examples

All reactions were performed under purified argon atmosphere using standard Schlenk techniques, or in a glovebox except copolymerization of styrene and ethylene under ethylene atmosphere.

Solvents were distilled from Na/benzophenone (THF, Et₂O) and Na/K alloy (toluene, pentane) under nitrogen, degassed thoroughly and stored under nitrogen prior to use.
Deuterated solvents (benzene-*d*₆, toluene-*d*₈, THF-*d*₈; >99.5% D, Eurisotop) were vacuum-transferred from Na/K alloy into storage tubes.
Styrene (Acros) was dried over CaH₂ and distilled under reduced pressure prior to polymerization experiments.
The ligand Ind-CMe₂-Ind was prepared in house. 1,3-(SiMe₃)₂C₃H₅K was prepared according to a reported procedure.
NMR spectra of complexes and polymers were recorded on Bruker AC-200, AC-300 and AM-500 spectrometers in Teflon-valved NMR tubes at room temperature unless otherwise indicated. ¹H and ¹³C chemical shifts are reported vs. SiMe₄ and were determined by reference to the residual solvent peaks.
Room temperature GPC analysis of polymers was performed in THF with a Waters apparatus. High temperature GPC analyses were carried out in trichlorobenzene at 135 °C.

### Synthesis of [Ind-CMe₂-Ind]Y[1 ,3-(SiMe₃)₂C₃H₃] (1)

Bis(indenyl) silylallyl yttrium complex was synthesized using an analogous "one-pot" procedure as what was reported before for complexes supported by Cp-CMe₂-Flu ligand (see Scheme above). The dilithiated salt of the ligand reacts via a salt metathesis reaction with the metal precursor LnCl₃(THF)ₓ giving the chloride precursor of the desired complex. The latter reacts further with the potassium salt of the bulky bis(trimethylsilyl)allyl without any intermediate purification to give the Y complex (**1**) in 70% yield.
More precisely, to a solution of IndH-CMe₂-IndH (0.546 g, 2 mmol) in Et₂O (50 mL) at -20 °C was added under vigorous stirring 2 equiv of n-BuLi (2.5 mL of a 1.6 M solution in hexane, 4.0 mmol). The reaction mixture was warmed to room temperature. The solution turned dark green, and after 3 h a yellow-green crystalline powder precipitated. To this suspension of the dilithium salt in ether cooled to -20 °C was added a suspension of YCl₃(THF)_{3.5} (0.895 g, 2.0 mmol) in Et₂O (50 mL). Upon vigorous stirring and warming to ambient temperature, the reaction mixture turned deep yellow. The solution was decanted from the precipitate, filtered, and evaporated in vacuo to give a yellow powder. To a suspension of this powder in toluene (20 mL) was added 1,3-(SiMe₃)₂C₃H₅K (0.449 g, 2.0 mmol). The reaction mixture was stirred for 8 h at room temperature. The resulting bright orange solution was filtered and volatiles were removed in vacuo. The residue was redissolved in hexane (2 x 15 mL) filtered again and dried in vacuo to give an orange crystalline powder (0.760 g, 70%). ¹H NMR (C₆D₆, 500 MHz, 25 °C): *δ* 7.59-7.27 (m, 4H, Ind), 7.00 (t, 1H, *J*_{H-H} = 16.1, allyl), 6.90-6.82 (m, 4H, Ind), 6.77-6.74 (m, 1H, Ind), 6.53 (s, 1H, Ind), 6.44 (s, 1H, Ind), 6.18 (s, 1H, Ind), 3.85 (d, 1H, *J*_{H-H} = 16.2, allyl) 2.25 (s, 3H, C*H*₃), 2.13 (s, 3H, C*H*₃), 1.19 (dd, 2H, *J*_{H-H} = 15.9 and 3.6, allyl), 0.19 (s, 9H, SiMe₃), -0.03 (s, 9H, SiMe₃). ¹³C{¹H} NMR (C₆D₆, 125 MHz, 25 °C): *δ* 161.5 (SiMe₃CHCHCHSiMe₃), 128.1 (Ind), 123.7 (Ind), 122.8 (Ind), 120.6 (Ind), 114.6 (Ind), 113.2 (Ind), 111.2 (Ind), 101.12 (Ind), 98.6 (Ind), 91.0 (SiMe₃CHCHCHSiMe₃), 89.0 (SiMe₃CHCHCHSiMe₃), 41.1 (C(CH₃)₂), 28.7 (C(CH₃)₂), 27.9 (C(CH₃)₂), 0.7 (SiMe₃), 0.3 (SiMe₃).

Complex **1** was found to be much more soluble in aromatic solvents, as well as aliphatic hydrocarbons than its unsubstituted allyl parent complex. **1** was characterized by ¹H and ¹³C NMR and an X-Ray diffraction study (Figure 1), which all establish the absence of coordinated THF.

### Synthesis of [Ind-CMe₂-Ind]Nd[1,3-(SiMe₃)₂C₃H₃] (2)

Neodymium complex **2** was prepared following the procedure described above for yttrium complex **1,** starting from NdCl₃(THF)₂ instead of YCl₃(THF)_{3.5.} Complex **2** was recovered as a brown-greenish solid.

### Homopolymerization of styrene.

In a glovebox, 3.0 to 10.0 mL of styrene were added to a pre-weighted amount of 20 to 60 mg of allyl-lanthanide complex placed in a Schlenk flask with a magnetic stir bar. Vigorous stirring at the appropriate temperature (oil bath) was immediately started. After a given time period, the Schlenk flask was opened to air and about 1 mL of a 10% solution of HCl in methanol was added to quench the reaction. The polymer precipitate was washed repeatedly with about 500 mL of methanol, filtered and dried in vacuum. Typical polymerization conditions and results are displayed in Table I.

**Table 1. Styrene homopolymerization results.^{a}**

| Entry | Complex | [St]/[Ln] | T (°C) | Time (min) | Yield (%) | Activity (kg/mol.h) | *M*ₙ (10³)^{c} | *M*_{w}/*M*ₙ ^{b} |
|---|---|---|---|---|---|---|---|---|
| 1 | **1** | 500 | 60 | 5 | 100 | 647 | 14 500 | 5.89 |
| (asr294) | | | | | | | | |
| 2 | **1** | 500 | 80 | 4 | 100 | 764 | 15100 | 4.17 |
| (asr297) | | | | | | | | |
| 3 | **1** | 450 | 100 | 2.3 | 100 | 1381 | 11500 | 3.83 |
| (asr298) | | | | | | | | |
| 4 | **1** | 500 | 120 | 2 | 100 | 1637 | 12100 | 3.45 |
| (asr299) | | | | | | | | |
| 5 | **1** | 4500 | 120 | 45 | 38 | 239 | 31400 | 1.95*^{c}* |
| (asr300) | | | | | | | | |
| 6*^{d}* | **1** | 500 | 80 | 10 | 95 | 283 | 61 000 | 1.92 |
| (asr301) | | | | | | | | |
| 7*^{e}* | **1** | 550 | 80 | 6 | 100 | 595 | 32 000 | 2.43 |
| (asr306) | | | | | | | | |
| 8 | **1** | 4600 | 80 | 21 | 78 | 1066 | 35300 | 2.56 |
| (asr307) | | | | | | | | |
| 9 | **2** | 520 | 80 | 6 | 100 | 600 | 55 900 | 2.51 |
| (asr315) | | | | | | | | |
| 10 | **2** | 520 | 80 | 6 | 100 | 618 | 57900 | 2.19 |
| (asr317)*^{e}* | | | | | | | | |
| 11 | **2** | 500 | 60 | 8 | 100 | 392 | 70800 | 2.63 |
| (asr322) | | | | | | | | |
| 12 | **2** | 480 | 100 | 5 | 100 | 1094 | 35008 | 2.27 |
| (asr323) | | | | | | | | |

| | | | | | | | | |
|---|---|---|---|---|---|---|---|---|
| ^{a} General conditions: 0.05-0.15 mmol Ln, total volume 2-20 mL, [St] = 8.70 M. ^{b} *M*ₙ and *M*_{w} determined by GPC in THF vs. PS standards. *^{c}* bimodal distribution, high molecular peak observed at *M*ₙ = 525 400. *^{d}* in 2 mL of heptane, [St] = 4.35 M. *^{e}* addition of 1 equiv. of THF (3 µL). | | | | | | | | |

## Claims

1. A neutral ansa-bis(indenyl) allyl group 3 metal complex, for the isospecific homo- or co-polymerisation of styrene, of general formula
[(Ind) R" (Ind)] Ln (allyl) (ether)ₙ
wherein (Ind) is a substituted or unsubstituted indenyl or hydrogenated indenyl group, R" is a bridge between the 1,1'-indenyl groups imparting stereorigidity to the complex, Ln is a metal Group 3 of the Periodic Table including the lanthanide elements, allyl is an allylic group of the general formula C₃R₅ wherein each R is the same or different and is hydrogen or alkyl group or silyl group with the provision that at least one R is a silyl group, ether is a donor solvent and n is an integer from 0 to 2.

2. The complex of claim 1 wherein the silyl group is SiMe₃.

3. The complex of claim 2 wherein the allyl group is 1,3-(SiMe₃)₂C₃H₃.

4. The complex of any one of claims 1 to 3 wherein the substituents on the indenyl groups are the same or different and are independently chosen from hydrogen or a group of formula XR'ᵥ in which X is chosen from Group 14, oxygen or nitrogen, preferably C, and each R' is the same or different and chosen from hydrogen or hydrocarbyl having from 1 to 20 carbon atoms and v+1 is the valence of X.

5. The complex of any one of claims 1 to 4 wherein the indenyl groups are unsubstituted or mono- or di-substituted with an alkyl or aryl group and they both have the same substitution pattern.

6. The complex of claim 5 wherein the substituents on each indenyl group are at positions 2 and/or 4 and are selected from methyl, tert-butyl, phenyl, or naphtyl.

7. The complex of claim 5 wherein both indenyl groups are unsubstituted.

8. The complex of any one of the preceding claims wherein Ln is Y or Nd.

9. The complex of any one of the preceding claims wherein the bridge R" is Me₂C, Me₂Si or Ph₂C, preferably Me₂C.

10. A process for preparing the neutral allyl group 3 metal complex of any one of claims 1 to 9 by salt metathesis reaction between the dilithiated salt of the ligand and metal precursor, followed by reaction with allyl salt selected among a potassium salt, a sodium and a lithium salt.

11. An active catalyst system for the isospecific homo- or co-polymerisation of styrene that consists of the neutral allyl group 3 metal complex of any one of claims 1 to 9.

12. A process for preparing isospecific homo- or co-polymers of styrene that comprises the steps of:
a) injecting the active catalyst system of claim 11 into the reactor;
b) injecting styrene and optional comonomer into the reactor;
c) maintaining under polymerisation conditions;
d) retrieving isotactic polystyrene.

13. The process of claim 12 wherein step c) is made at a temperature ranging from room temperature to 120°C.

14. The process of claim 13 wherein the temperature ranges from 60 to 100°C.

15. Isotactic polystyrene having an isotactic index of at least 95% obtainable by the process of any one of claims 12 to 14.

16. Isotactic polystyrene having an isotactic index of at least 99% obtainable by the process of any one of claims 12 to 14.

17. Isotactic polystyrene according to claim 15 or 16 wherein the polydispersity index D is from 1.2 to 7.

18. Isotactic polystyrene according to claim 17 wherein the polydispersity index D is from 1.6 to 6.

19. Isotactic polystyrene according to claim 18 wherein the polydispersity index D is from 1.8 to 6.

20. Isotactic polystyrene according to any one of claims 15 to 19 wherein the polystyrene is monomodal.

21. Isotactic polystyrene according to any one of claims 15 to 20 wherein the number average molecular weight Mn is from 10,000 to 200,000 g/mol.

22. Isotactic polystyrene according to claim 21 wherein the number average molecular weight Mn is from 10,000 to 150,000 g/mol.

23. Isotactic polystyrene according to claim 22 wherein the number average molecular weight Mn is from 10,000 to 80,000 g/mol.

24. Isotactic monomodal polystyrene wherein the polydispersity index D is from 1.2 to 7.

25. Isotactic polystyrene according to claim 24 wherein the polydispersity index D is from 1.6 to 6.

26. Isotactic polystyrene according to claim 25 wherein the polydispersity index D is from 1.8 to 6.

27. Isotactic polystyrene according to any one of claims 24 to 26 wherein the isotactic index of at least 95%.

28. Isotactic polystyrene according to claim 27 wherein the isotactic index of at least 99%.

29. Monomodal polystyrene wherein the polydispersity index D is from 1.2 to 7.

30. Monomodal polystyrene according to claim 29 wherein the polydispersity index D is from 1.6 to 6.

31. Monomodal polystyrene according to claim 30 wherein the polydispersity index D is from 1.8 to 6.

32. An active catalyst system for the polymerisation of ethylene and/or alpha-olefins that consists of the neutral allyl group 3 metal complex of any one of claims 1 to 9.
